# EUROPEAN PATENT SPECIFICATION

(11) **EP 3 023 639 B1**
(45) Date of publication and mention of the grant of the patent: **03.01.2018**
(21) Application number: 15192914.8
(22) Date of filing: 04.11.2015
(51) Int. Cl.: H02P 27/00, F04B 17/00, F04D 13/06, H02M 3/04, H02M 7/44, H02J 7/35

(54) **SYSTEM FOR WATER SUPPLY USING SUNLIGHT**
WASSERVERSORGUNGSSYSTEM MITTELS SONNENLICHT
SYSTÈME D'ALIMENTATION EN EAU PAR LA LUMIÈRE SOLAIRE

(30) Priority: 18.11.2014 KR 20140161089
(43) Date of publication of application: 25.05.2016
(60) Divisional application: 16176796.7
(73) Proprietor: LSIS Co., Ltd., Anyang-si, Gyeonggi-do 431-080 (KR)
(72) Inventor: LAWRENCE, Waithiru Charles, 14119 Anyang-si, Gyeonggi-do (KR)
(74) Representative: Lang, Johannes

(56) References cited:
- WO-A2-2013/093654
- US-A- 5 569 998
- US-B1- 6 590 793

## Description

### BACKGROUND OF THE INVENTION

### 1. Field of the Invention

The present invention relates to a water supply system using sunlight, and particularly to a water supply system using sunlight, continuously using a water supply pump regardless amounts of the lights from the sun.

### 2. Description of the Conventional Art

Generally, generating solar energy can be made through multiple steps, comprising collecting solar energy through solar cell panel, generating a direct current (DC) when a voltage difference is induced in the solar cell panel by the collected solar energy, and converting the DC to alternating current (AC) by using a power converter.

Such a solar energy generating requires high facility costs, but it can have high energy efficiency without the need of additional fuel once the facility was built up, and it is semi-permanently operable.

Therefore, solar energy generation system has been used in various technical advanced fields of the industry, such as a system of supplying self-generated energy to the places where a reliable electrical power supply has been problematic.

Among those fields, facilities of solar energy generating pump have been built for supplying drinking water, agricultural water, or water for stock farming in a remote area.

The facility for the solar energy generation can supply water to meet the needs of places by running AC motor driven by an AC that has been generated and converted by the solar energy generation system.

US 6 590 793 B1 discloses an electric power supplying apparatus using unstable electric power supply and control method therefor for driving a pump.

WO 2013 / 093654 A2 discloses a stand-alone combined apparatus for electric power harvesting and potable water treatment.

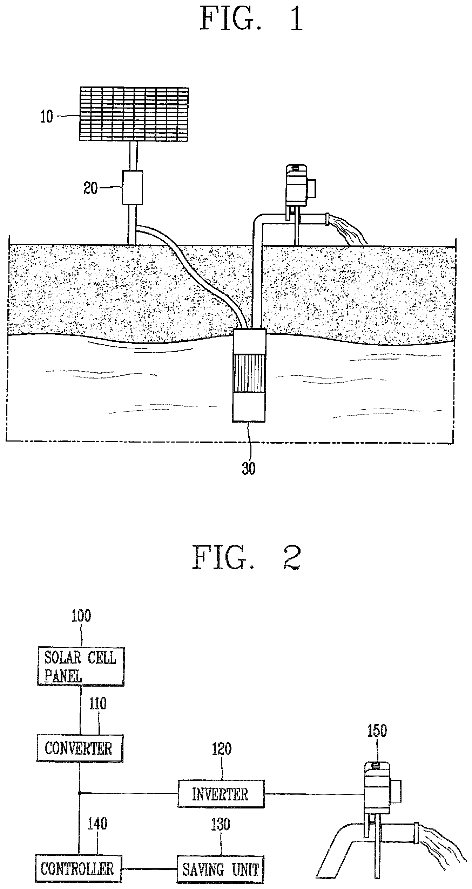

US 5 569 998 A discloses a solar powered pumping system. Documents US5106495, US6863827, DE102006039695, US4636931, and US2010/0109601 also disclose water supply systems with solar cells and electricity storage in batteries. Fig.1 illustrates a schematic representation of a typical water supply system using solar energy.

As shown in Fig.1, a conventional water supply system using sunlight comprises a solar cell panel (10) to generate currents using concentrated sunlight, a controller (20) to drive a pump (30) using the current that has been generated by the solar cell panel (10), and a pump (30) to supply water corresponding to control of the controller (20).

Such a conventional water supply system using sunlight generates currents using concentrated sunlight collected by the solar cell panel (10) comprising a plurality of solar cells (not shown); then, the controller (20) drives a pump by supplying the currents generated by solar cell panel (10) such that the places, like rice paddy or farming fields, can have adequate water supplied by the pump (30).

However, the conventional water supply system using sunlight is not able to store current that has been generated by solar cell panel (10) separately. Also, this system cannot store energy to use later, the energy left over after running the pump. As such, this type of solar system has an energy efficiency problem.

Besides, this convention solar system (30) is only available to drive the pump (30) during the daytime, especially when a large amount of sunlight takes place. The system is not available to run during the nighttime when the amount of sunlight is relatively small; therefore the water supply time using this system is limited.

### SUMMARY OF THE INVENTION

The present invention has been made to solve the foregoing disadvantages of the prior art and therefore an object of certain embodiments of the present disclosure is to provide water supply system using sunlight that is capable to supply water to its respective area by steadily driving a pump.

An objective of the invention is solved by providing the water supply system comprising a solar cell panel configured to generate direct current (DC) by collecting concentrated sunlight; a converter configured to amplify and output the generated DC from the solar cell panel; an inverter configured to convert the DC outputted from the converter to output an alternating current (AC); a controller configured to measure an amount of the DC generated from the solar cell panel so as to supply the AC outputted from the inverter to a pump when an amount of the DC measured is less than a reference current value and to control to store an amount of a portion of the DC exceeding the reference current value into a saving unit when the amount of the DC measured is greater than the reference current value; the saving unit configured to store the amount of the portion of the DC exceeding the reference current value according to a control of the controller; and a pump configured to supply water upon receiving the AC outputted from the inverter. The controller is further configured to supply the DC that that has been stored in the saving unit to the inverter so as to convert the DC stored into an AC and then to supply the AC to the pump when an amount of the DC generated by the solar panel drops below a preset value.

As discussed above, the claimed water supply system using sunlight has a technical effect of improving the energy efficiency by having a saving unit storing current that was generated by solar cells but was left over after running a motor so as to use the stored current later.

Also, the claimed water supply system has another technical effect of steadily driving the motor without time restriction by supplying the stored energy to the motor even during nighttime or early morning when the an amount of sunlight is relatively small.

Also, the claimed water supply system has another technical effect of improving agricultural productivity by efficiently supplying water to the agricultural foods without any time restriction.

### BRIEF DESCRIPTION OF THE DRAWING

The accompanying drawings, which are included to provide a further understanding of the invention and are incorporated in and constitute a part of this specification, illustrate exemplary embodiments and together with the description serve to explain the principles of the invention.

In the drawings:
FIG. 1 is a schematic view of illustrating water supply system using sunlight according to prior art;
FIG. 2 is a block diagram illustrating the water supply system using sunlight according to one exemplary embodiment of the present invention;
FIG. 3 is a block diagram illustrating the water supply system using sunlight according to another exemplary embodiment not covered by the present invention; and
FIG. 4 is a flow chart illustrating a water supply method using sunlight according to one exemplary embodiment of the present invention.

### DETAILED DESCRIPTION OF THE PREPERRED EMBODIMENT

An exemplary embodiment will be described more fully hereinafter with reference to the accompanying drawings, in which exemplary embodiment is shown.

FIG. 2 is a block diagram illustrating the water supply system using sunlight according to one exemplary embodiment of the present disclosure.

As shown in FIG. 2, the claimed water supply system using sunlight comprises solar cell panel (100), a converter (110), an inverter (120), a controller (140), a saving unit (130), and a pump (150).

The solar cell panel (100) is configured to generate a direct current (DC) by colleting solar energy. Here, an amount of the DC generated by the solar cell panel (100) by collected concentrated sunlight is either increased or deceased depending on the amount of solar energy radiated by the sun.

The converter (110) is configured to amplify and output the DC generated from the solar cell panel (100), changing the level of the DC to be suitable to drive the pump (150).

The inverter (120) is configured to convert the DC outputted from the converter (110) to an alternating current (AC) to drive AC motor of the pump (150). The controller (140) is configured to measure an amount of the DC generated from the solar cell panel (100) so as to supply the AC outputted from the inverter (120) to a pump (150) when an amount of the DC measured is less than a reference current value (the maximum amount of current need to drive an AC motor installed within the pump (150)).

Also, when the amount of the DC measured exceeds the reference current value, the controller (140) is configured to control to store an amount of a portion of the DC exceeding the reference current value into a saving unit while converting a portion of the DC not exceeding the reference current value to an AC through the inverter (120) so as to drive an AC motor of the pump (150).

Here, when an amount of direct current (DC) generated by the solar panel (100) is both below a reference value and below a preset amount (the amounts of current for normally running an AC motor of the pump (150)), the controller (140) is configured to supply a residual direct current (DC) that has been stored in the saving unit (130) to the inverter (120) so as to convert the residual DC to AC that is to outputted to drive an AC motor of the pump (150) supplying water.

The saving unit (130) is configured to store the amount of the portion of the DC exceeding the reference current value when an amount of currents generated by the solar cell panel (100) exceeds a reference value; and, the pump (150) is configured to supply water to a desired place in need of the water according to an AC mother that receiving AC (power) from the inverter (120).

According to the present invention, when a current is generated by a solar cell panel (100) using solar energy collected, the invention can use this current either to drive a pump (150) or to store a residual current that was left over after running the pump into a saving unit (130), and therefore the current left over can be efficiently managed. This residual current can be stored separately, and then it can be used later; therefore, the present invention improves energy efficiency.

Also, it has been a hardship to run a pump (150) during the nighttime or the beginning of morning because an amount of sunlight during those time periods is relatively smaller than other time periods. However, the claimed water supply system is configured to run the motor steadily without any time restriction. The claimed invention can supply the stored energy to run a pump (150) for supplying water regardless of the amounts of sunlight.

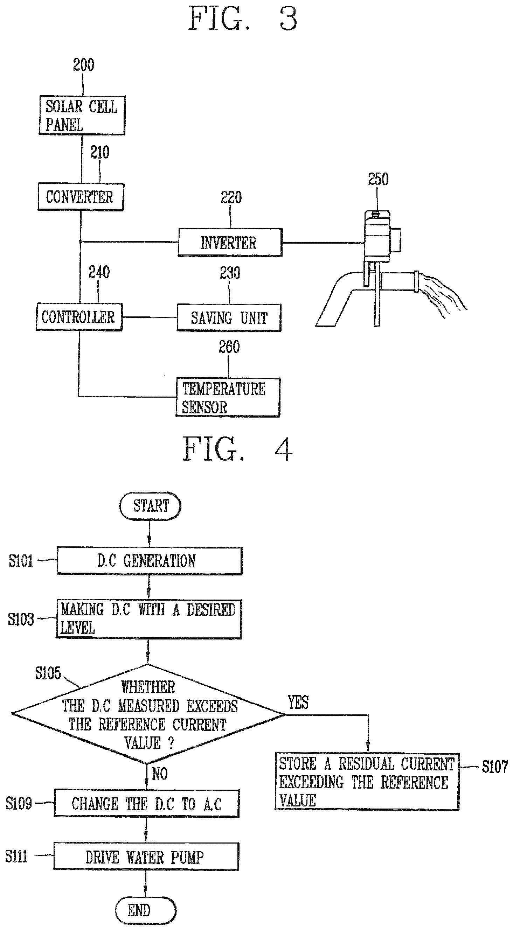

On the other hand, FIG. 3 is a block diagram illustrating the water supply system using sunlight according to an exemplary embodiment not covered by the present disclosure.

As shown in FIG. 3, the exemplary embodiment not covered by the present invention, the water supply system comprises a solar cell board (200), a converter (210), an inverter (220), a temperature sensor (260), a controller (240), a saving unit (230), and a pump (250).

The solar cell board (200) is configured to generate direct current (DC) by colleting solar energy, and the converter (210) is configured to amplify and output the DC generated from the solar cell panel (200), making the DC with a desired level.

Also, the inverter (220) is configured to convert the DC outputted from the converter (210) to an alternating current (AC) to drive AC motor of the pump (250).

The temperature sensor (260) is configured sense a temperature of atmosphere, and the controller (240) is configured to run the pump (150) based the sensed temperature by the temperature sensor (260).

The controller (240) is configured to supply the AC outputted from the inverter (220) to the pump (250) when a temperature sensed by the temperature sensor (260) is lower than a reference temperature. The controller (240) is also configured to control to store an amount of the current exceeding an amount of the current generated at a reference temperature into a saving unit (230) when the temperature sensed is higher than the reference temperature.

Here, the reference current value can be set based on the size of the rice paddy or farming fields. For instance, when a size of land that needs water supply is large, a reference temperature will be set high so that a great amount of supplying current corresponding to the reference temperature will be set. In the same way, when the size of land that needs water supply is small, a reference temperature will be set low so that a small amount of supplying current corresponding to the reference temperature will be set.

Also, the controller (240) is configured to supply the DC that has been stored in the saving unit (230) to the inverter (220) so as to convert the DC stored into an AC and then supply the AC to the pump (250) such that water supply is available through the pump (250) when an atmosphere temperature drops below a reference temperature and when the atmosphere temperature drops below a preset temperature (a temperature incapable of collecting solar energy to run a pump).

Also, the saving unit (230) is configured to store a residual current according to a control of the controller (240), and the pump (250) is configured to supply water to places, like rice pay or farming lands, upon receiving alternating current from the inverter (220).

FIG. 4 shows the detail steps of water supplying using sunlight according to one exemplary embodiment of the present invention.

Most of all, a solar cell panel (100) generates direct current (DC) by collecting concentrated sunlight, and the generated DC current is converted to be output from a converter (110).

The outputted amplified current is then converted to an alternative current by an inverter (120) and then the converted AC is supplied to a pump (150).

Here, a controller (140) measures current generated by a solar cell panel (100). And, when an amount of the DC measured is less than a reference current value, the controller (140) supplies the generated current to the inverter (120), change it to alternative current (AC), and then supply the AC to a pump (150). Or, when the amount of the DC measured exceeds the reference current value, the controller (140) stores a residual current that exceeds the reference value to saving unit (130) separately.

Also, when an amount of direct current (DC) generated by the solar panel (200) is below a reference value and when the amount becomes below a preset amount of current, the controller (240) can supply a direct current that has been stored in the saving unit (230) to a pump (150). As such, the claimed invention can continuously drive the pump (150) regardless of an amount of the radiated solar energy from sunlight.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claim and therefore all changes and modifications that fall within the metes and bounds of the claim, or equivalents of such metes and bounds are therefore intended to be embraced by the appended claim.

## Claims

1. A water supply system using sunlight comprising:
a solar cell panel (100) configured to generate direct current (DC) by collecting concentrated sunlight;
a converter (110) configured to amplify and output the generated DC from the solar cell panel (100);
an inverter (120) configured to convert the DC outputted from the converter (110) to output an alternating current (AC);
a controller (140) configured to measure an amount of the DC generated from the solar cell panel (100) so as to supply the AC outputted from the inverter (120) to a pump (150) when an amount of the DC measured is less than a reference current value and to control to store an amount of a portion of the DC exceeding the reference current value into a saving unit (130) when the amount of the DC measured is greater than the reference current value;
wherein,
the saving unit (130) is configured to store the amount of the portion of the DC exceeding the reference current value according to a control of the controller; and
the pump (150) is configured to supply water upon receiving the AC outputted from the inverter (120),
wherein the controller (140) is configured to supply the DC that that has been stored in the saving unit (130) to the inverter (120) so as to convert the DC stored into an AC and then to supply the AC to the pump when an amount of the DC generated by the solar panel (100) drops below a preset value.

## Patentansprüche

1. Wasserversorgungssystem, das Sonnenlicht verwendet, umfassend:
ein Solarzellenpanel (100), das eingerichtet ist, um durch Sammeln von konzentriertem Sonnenlicht einen Gleichstrom (DC) zu erzeugen;
einen Wandler (110), der eingerichtet ist, um den von dem Solarzellenpanel (100) erzeugten DC zu verstärken und auszugeben;
einen Wechselrichter (120), der eingerichtet ist, um den DC, der von dem Wandler (110) ausgegeben wird, zu konvertieren, um einen Wechselstrom (AC) auszugeben;
eine Steuerung (140), die eingerichtet ist, um einen Betrag des DC, der von dem Solarzellenpanel (100) erzeugt wird, zu messen, um den AC, der von dem Wechselrichter (120) ausgegeben wird, an eine Pumpe (150) zu liefern, wenn ein Betrag des gemessenen DC niedriger ist als ein Referenzstromwert, und um zu steuern, dass ein Betrag eines Teils des DCs, welcher den Referenzstromwert überschreitet, in eine Speichereinheit (130) gespeichert wird, wenn der Betrag des gemessenen DCs größer als der Referenzstromwert ist;
wobei,
die Speichereinheit (130) eingerichtet ist, um den Betrag des Teils des DCs, welcher den Referenzstromwert gemäß einem Steuern der Steuerung überschreitet, zu speichern; und
die Pumpe (150) eingerichtet ist, um beim Empfangen des ACs, welcher von dem Wechselrichter (120) ausgegeben wird, Wasser zu liefern,
wobei die Steuerung (140) eingerichtet ist, um den DC, der in der Speichereinheit (130) gespeichert wird, an den Wechselrichter (120) zu liefern, um den gespeicherten DC in einen AC zu konvertieren und dann den AC zu der Pumpe zu liefern, wenn ein Betrag des durch das Solarpanel (100) erzeugten DCs unter einem voreingestellten Wert fällt.

## Revendications

1. Un système d'alimentation en eau utilisant la lumière solaire, comprenant :
un panneau de cellules solaires (100) configuré pour générer du courant continu (DC) par recueil de lumière solaire concentrée ;
un convertisseur (110) configuré pour amplifier et délivrer le DC généré à partir du panneau de cellules solaires (100) ;
un onduleur (120) configuré pour convertir le DC délivré à partir du convertisseur (110) pour délivrer un courant alternatif (AC) ;
un contrôleur (140) configuré pour mesurer une quantité du DC généré à partir du panneau de cellules solaires (100) de manière à fournir à une pompe (150) le AC délivré à partir de l'onduleur (120) lorsqu'une quantité du DC mesurée est inférieure à une valeur de courant de référence et pour contrôler le stockage d'une quantité d'une partie du DC dépassant la valeur du courant de référence dans une unité de préservation (130) lorsque la quantité du DC mesurée est supérieure à la valeur de courant de référence ;
dans lequel
l'unité de préservation (130) est configurée pour stocker la quantité de la partie du DC dépassant la valeur de courant de référence en fonction d'un contrôle du contrôleur ; et
la pompe (150) est configurée pour fournir de l'eau sur réception du AC délivré à partir de l'onduleur (120),
dans lequel le contrôleur (140) est configuré pour fournir le DC qui a été stocké dans l'unité de préservation (130) à l'onduleur (120) de manière à convertir le DC stocké en un AC puis à fournir le AC à la pompe lorsqu'une quantité du DC générée par le panneau solaire (100) chute au-dessous d'une valeur prédéfinie.
